(19)

Europäisches
Patentamt
European
Patent Office
Office européen
des brevets

(11) **EP 2 296 110 A1**

(12) **EUROPEAN PATENT APPLICATION**

(43) Date of publication:
   **16.03.2011 Bulletin 2011/11**

(51) Int Cl.:
   **G06N 3/00** $^{(2006.01)}$

(21) Application number: **10151229.1**

(22) Date of filing: **20.01.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS** | (72) Inventors:<br>• **Teshnehlab, Mohammad**<br>  **Tehran (IR)**<br>• **Nekoui, Mohammad Ali**<br>  **Tehran (IR)**<br>• **Shafiabady, Niusha**<br>  **Tehran (IR)** |
| (30) Priority: **05.11.2009 EP 09175174** | (74) Representative: **P&TS**<br>**Patents & Technology Surveys SA**<br>**Case Postale 2848**<br>**2001 Neuchâtel (CH)** |
| (71) Applicant: **Khajeh Nasir Toosi University of Technology**<br>**19697 Teheran (IR)** | |

(54) **Optimization method and device**

(57)   The present invention proposes a novel evolutionary optimization technique that is faster than the conventional algorithms, as it allows finding the optimal point in a much lower number of iterations, maintaining the ease of implementation and robustness of the known algorithms. The S.-T. algorithm involves the steps of: defining a population consisting of plurality of particles, each particle represented by a point having a position in the search space, and a velocity; iteratively performing the steps of: calculating the value of the fitness function for each particle in the population; deciding which particle has the best fitness value; updating the position and the velocity of each particle in the population, and is **characterized in that** the step of updating the velocity of each particle includes the dynamic effect of a random-generated force

Fig. 1

**Description**

Field of the invention

The present invention also relates to the technical field of optimization and search problems, that involves finding an optimal solution to an objective function in a given search space. Optimization and search techniques are employed in a multitude of scientific contexts and technological applications including, to name only a few: signal processing; control of electric transmission and distribution networks; control of oil and gas pipelines; design and balance of packet data networks; crystallographic analysis; airspace flight path optimization; supply chain management; VLSI design, and many others.

Description of related art

Evolutionary optimization techniques have been proposed and have played an important role in a variety of applications. Two known examples of evolutionary optimization algorithm are the Genetic Algorithm (GA) and the Particle Swarm Optimization (PSO).

Evolutionary optimization techniques have proven to be powerful devices for finding the optimal values of a variety of nonlinear functions both in constrained and unconstrained multidimensional search spaces. These optimization techniques are robust, easy to implement, and are generally derivative-free, in the sense that they depend only from the evaluation of the objective function (also designated as the fitness function).

However, these iterative techniques are often too slow to be effectively used in real-time or quasi real-time systems, or in where a quick answer is demanded. The average number of iterations or generations that are needed to find a solution in a realistic minimization problem is typically of the order of 100-1000, which makes these techniques ill suited for online applications.

The present invention proposes a novel evolutionary optimization technique that is faster than the conventional algorithms, as it allows finding the optimal point in a much lower number of iterations, maintaining the ease of implementation and robustness of the known algorithms. This method is also named the Shaflabady-Teshnehlab method, or the S.T. method

Another aim of the present invention is to propose an optimization technique that is applicable in online parameter estimations and other optimization requiring a quick optimization.

A further aim of the present invention is to propose an optimization technique performing satisfactorily with a number of different fitness functions.

Furthermore, it is proposed an optimization technique suitable for high order complex systems and in soft computing and related areas.

Brief summary of the invention

According to the invention, these aims are achieved by means of the optimization method that is the object of the corresponding method claim.

The object of the invention is also achieved by the computer program and a device that are the object of the independent claims in the corresponding categories.

Brief Description of the Drawings

The invention will be better understood with the aid of the description of an embodiment given by way of example and illustrated by the figures, in which:

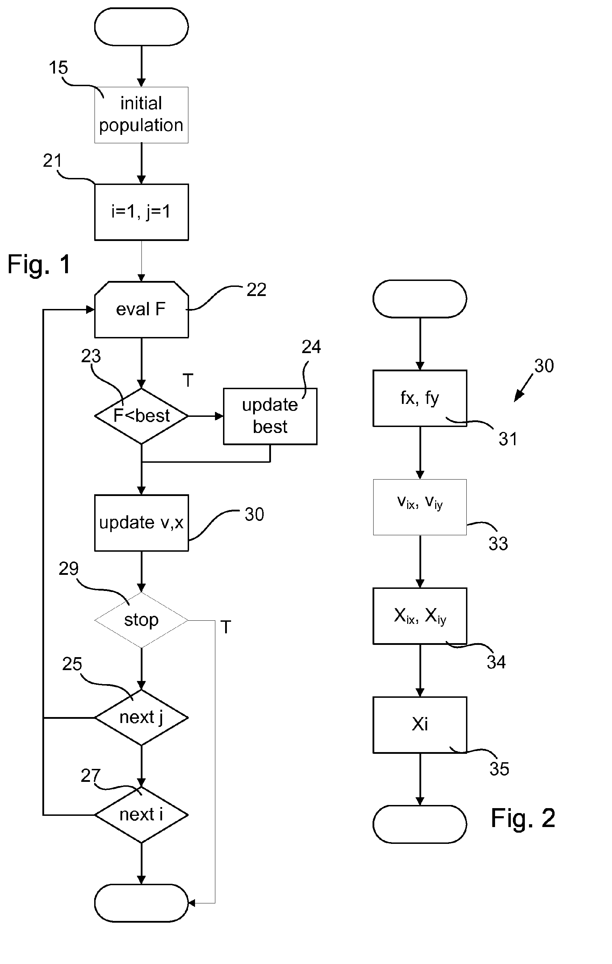

The flowcharts of Figures 1 and 2 illustrate, in simplified form, aspects of the method of the invention.

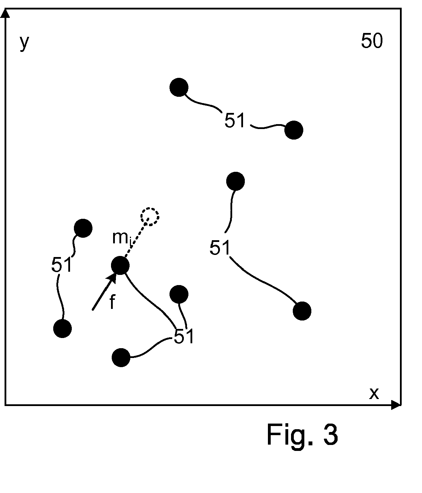

The diagram of figure 3 shows graphically a update step according to an aspect of the present invention.

Detailed Description of possible embodiments of the Invention

With reference to figure 3, the optimization technique of the present invention has some analogies with the propagation of sound in air and random motion of gas molecules. The algorithm involves the creation, in a solution domain 50 of a population of particles 51, each determined by a suitable number of coordinate variables that are represented in the figure by the two Cartesian coordinates x, y for simplicity. In general, the algorithm of the invention will deal with a population of particles in an N-dimensional solution domain, N being any suitable number. A function $F(\overline{X})$ is defined in the solution domain. The goal of the optimization algorithm is to find an extreme of the $F(\overline{X})$. In the present document we will refer, to simplify the treatment, to the search of a minima.

The set of coordinates defining the position of a particle 51 can be regarded as a genetic representation of the solution domain 50 of the function F(X), which can be regarded as a fitness function. In the following document the wordings "particle" and "chromosome" are treated as synonyms and will be used interchangeably. Likewise the wordings "coordinate", "component", and "gene" are treated as synonyms and will be used interchangeably. In the same manner, also the wording "iteration" and "generation" will be used, in the context of this document, as equivalent.

According to an aspect of the invention, the initial population is produced giving to each particle 51 a dynamic parameter $m_j$, that is analogous to a mass, and different positions and velocities. At each successive iteration a force $f$ is produced randomly to move the particle.

Referring now to the flowchart of figure 1, an embodiment of the present invention includes the following method steps:

  o Generate an initial population of particles in the solution domain with initial velocities and positions, and assigning to each particle a dynamic parameter $m_i$ (block 15);

  o execute repeatedly for each iteration, up to a predetermined maximum (index i, blocks 21, 27) and for each particle in the population (index j, blocks 21, 25) the steps of :

    o Evaluate the fitness function $F$ (block 22);

    o Decide which particle has had the best performance (block 23) and update a global best value accordingly (block 24);

    o Update the particle's velocity and position (block 30).

    o Optionally the algorithm of the present invention also includes a step of deciding whether a satisfactory solution has been attained, based on some suitable predefined termination criteria (block 29), and exiting the generation loop if appropriate.

Figure 2 displays, in simplified fashion, the method used to update the particle's velocity and position (block 30). In block 31 a force is generated at random for each particle in the population. The inventors have found that an effective manner of generating the force is to compute, for the i-th particle in the population, a two-component force $f_{ix}$, $f_{iy}$ For example, as in the formula:

$$\psi_x = rand \times 50 - 25$$

$$\psi_y = rand \times 50 - 25$$

$$f_{ix} = rand \times \psi_x$$

$$f_{iy} = rand \times \psi_y$$

in which *rand* represents a random number in the interval [0, 1], following an uniform distribution, for example. In the above example the parameters $\psi$ are generated in the interval [-25, 25], and the other random numbers are generated in the interval [0, 1]. These values have been found effective in a large variety of problems. They can be changed, however, according to the circumstances. Preferably each particle in the population has a specific pair of parameters $\psi_x, \psi_Y$ calculated, and the forces $\overline{f}_x, \overline{f}_y$ are vector values with components $f_{ix}$, $f_{iy}$ the number of component being the same as the components $x_i$ of as the particles in the population.

According to an aspect of the invention, step 33 consists in the evaluation of the new particle velocities, for example as in formula:

$$v_{ix}(t+1) = m_i v_{ix}(t) + f_{ix}\Delta t$$

$$v_{iy}(t+1) = m_i v_{iy}(t) + f_{iy}\Delta t$$

in which $m_i$ are the mass parameters defined for each particle in step 15. The velocities $\bar{V}_x, \bar{V}y$ are vectors with components $V_{ix}, V_{iy}$, like the forces $F_x, F_y$

Preferably the algorithm of the invention includes also steps to limit the velocities $V_{ix}, v_{iy}$ into a suitable interval, for example. The aim of this is to avoid a scattering of the population over too large a region of the solution space 50. Preferably the interval is chosen at the beginning of the simulation, with respect to the dimension of the solution space, [-5, 5] being a "typical" choice that has been found to give satisfactory results. The method of the invention could also include steps of adapting the size of the interval along the iterations, however.

$\Delta t$ is another parameter that can be modified by trials and errors, in order to improve the performance of the inventive method. It is typically set to $\Delta t = 0.1$.

Preferably, the method of the invention includes a step 35 of computing a updated position of each particle based the updated velocities. In a preferred embodiment, the velocities include two vectors with components, $v_{ix}, v_{iy}$, and the updated positions are evaluated by first calculating an updated position for each of the two vectors $\bar{V}_x, \bar{V}y$

$$x_{ix}(t+1) = x_{ix}(t) + v_{ix}(t+1)$$
$$x_{iy}(t+1) = x_{iy}(t) + v_{iy}(t+1)$$

and then combining the two updated positions $\bar{x}_x, \bar{x}_y$. It has been found that an effective manner of combining $\bar{x}_x, \bar{x}_y$ is given by

$$X_i = \mathrm{Re}\ \sqrt{x_{ix}(t+1) + x_{iy}(t+1)}$$

It is to be mentioned that the X produced by the above equation can only be positive but the optimal values might be negative. In order to solve this problem, in this case, the sign of X can be set at random, if the solution domain includes negative coordinates.

The effectiveness of the method of the invention verified by comparing it with the known GA and PSO methods, choosing the fitness function among the following benchmark test functions:

Spherical ($f_1$) :

$$f_1 = \sum_{i=1}^{n} x_i^2$$
$$\bar{x} \in [-100,\ 100]^n$$
$$\min f_1(\bar{x}^*) = f_1(\vec{0}) = 0$$

Six Hump Camel Back ($f_2$) :

$$f_2 = (4 - 2.1x_1^2 + \frac{x_1^4}{3})x_1^2 + x_1 x_2 + (-4 + 4x_2^2)x_2^2$$

$$\vec{x} \in \begin{bmatrix} -3 & 3 \\ -2 & 2 \end{bmatrix}$$

$$\min\ f_2(\vec{x}*) = f_2(\begin{bmatrix} -0.08 & 0.7 \\ 0.08 & -0.7 \end{bmatrix}) = -1.0316$$

*Schwefel* ($f_3$) :

$$f_3 = \sum_{i=1}^{n}\left[-x_i \sin\left(\sqrt{|x_i|}\right)\right]$$

$$\vec{x} \in [-500,\ 500]^n$$

$$\min\ f_3(\vec{x}*) = f_3(42\vec{0}.9687) = -418.9829n$$

Rastrigin ($f_4$):

$$f_4 = \sum_{i=1}^{n}(x_i^2 - 10\cos(2\pi x_i) + 10)$$

$$\vec{x} \in [-5.12,\ 5.12]^n$$

$$\min\ f_4(\vec{x}*) = f_4(\vec{0}) = 0$$

*Hyperellipsoid* ($f_5$) :

$$f_5 = \sum_{i=1}^{n}(i \times x_i^2)$$

$$\vec{x} \in [-5.12,\ 5.12]^n$$

$$\min\ f_5(\vec{x}*) = f_5(\vec{0}) = 0$$

Griewank ($f_6$):

$$f_6 = 1/4000\sum_{i=1}^{n}x_i^2 - \prod_{i=1}^{n}\cos(x_i/\sqrt{i}) + 1$$

$$\vec{x} \in [-300,\ 300]^n$$

$$\min\ f_6(\vec{x}*) = f_6(\vec{0}) = 0$$

*Easom* ($f_7$) :

$$f_7 = -\prod_{i=1}^{n} \cos(x_i) \exp(-(x_i - \pi)^2)$$

$$\vec{x} \in [-100,\ 100]^n$$

$$\min\ f_7(\vec{x}^*) = f_7(\vec{\pi}) = -1$$

*Drop Wave* ($f_8$):

$$f_8 = -\frac{1 + \cos\left(12\sqrt{\sum_{i=1}^{2} x_i^2}\right)}{\frac{1}{2}\sum_{i=1}^{2} x_i^2 + 2}$$

$$\vec{x} \in [-5.12,\ 5.12]^2$$

*Ackley* ($f_9$):

$$f_9 = -20\exp\left(-0.2\sqrt{1/n\sum_{i=1}^{n} x_i^2}\right)$$

$$- \exp\left(1/n\sum_{i=1}^{n}\cos(2\pi x_i)\right) + 20 + e$$

$$\vec{x} \in [-32,\ 32]^n$$

$$\min\ f_9(\vec{x}^*) = f_9(\vec{0}) = 0$$

*Quadric* ($f_{10}$):

$$f_{10} = \sum_{i=1}^{n}\left(\sum_{j=1}^{i} x_j\right)^2$$

$$\vec{x} \in [-100,\ 100]^n$$

$$\min\ f_{10}(\vec{x}^*) = f_{10}(\vec{0}) = 0$$

*Rosenbrock* ($f_{11}$):

$$f_{11} = \sum_{i}^{n}(100(x_i + 1 - x_i^2)^2 + (x_i - 1)^2)$$

$$\vec{x} \in [-2.048,\ 2.048]^n$$

$$\min\ f_{11}(\vec{x}^*) = f_{11}(\vec{1}) = 0$$

*Zakharov* ($f_{12}$):

$$f_{12} = \sum_i^n x_i^2 + (\sum_i^n 1/2 ix_i)^2 + (\sum_i^n 1/2 ix_i)^4$$
$$\vec{x} \in [-10, \ 10]^n$$
$$\min \ f_{12}(\vec{x}^*) = f_{12}(\vec{0}) = 0$$

Levy ($f_{13}$):

$$f_{13} = (\pi / n) \times A$$
$$A = \left( k \sin^2(\pi y_1) + \sum_{i=1}^{n-1} ((y_i - a)^2 (1 + k \sin^2(\pi y_{i+1}))) + (y_n - a)^2 \right)$$
$$y_i = 1 + 1/4(x_i - 1), \quad k = 10, \quad a = 1$$
$$\vec{x} \in [-10, \ 10]^n$$
$$\min \ f_{13}(\vec{x}^*) = f_{13}(\vec{1}) = 0$$

The results of the simulation are summarized by the following tables:

Table 1- GA simulation

|      | $X_1$       | $X_2$       | Minimum     | Iterations | population |
|------|-------------|-------------|-------------|------------|------------|
| f1   | -0.0009     | 0.0012      | 2.1920e-06  | 100        | 20         |
| f2   | 0.0898      | -0.7129     | -1.0316     | 100        | 20         |
| f3   | 420.9475    | 420.8334    | -837.9634   | 100        | 20         |
| f4   | 0.6567e-03  | -0.3296e-03 | 1.0710e-04  | 100        | 20         |
| f5   | -0.6027 e-03 | -0.3044 e-03 | 7.3380e-07 | 100        | 20         |
| f6   | -0.8022e-03 | -0.8326e-03 | 4.954e-07   | 100        | 20         |
| f7   | 3.1426      | 3.1405      | -1          | 100        | 20         |
| f8   | -0.5201     | 0.0125      | -0.9362     | 100        | 20         |
| f9   | 0.1678e-04  | -0.2015e-04 | 7.4182e-05  | 100        | 20         |
| f10  | 0.0013      | -0.0360     | 0.0417      | 100        | 20         |
| f11  | 2.9941      | -0.6145     | 1.6166      | 100        | 20         |
| f12  | 0.1152      | 0.3038      | -0.1513     | 100        | 20         |
| f13  | -9.9855     | -9.1711     | 0.0820      | 100        | 20         |

Table 2- PSO simulation

|      | $X_1$         | $X_2$         | Minimum      | Iterations | population |
|------|---------------|---------------|--------------|------------|------------|
| f1   | 0.1324e-012   | 0.0550e-012   | 2.0560e-026  | 100        | 20         |
| f2   | -0.0898       | 0.7127        | -1.0316      | 100        | 20         |
| f3   | 439.7942      | -309.5672     | -668.9862    | 100        | 20         |
| f4   | 0.1690e-08    | 0.0740e-08    | 0            | 100        | 20         |
| f5   | -0.1661 e-013 | -0.0539 e-013 | 3.9237e-028  | 100        | 20         |
| f6   | 0.1040 e-07   | -0.0093 e-07  | 0            | 100        | 20         |

(continued)

|  | $X_1$ | $X_2$ | Minimum | Iterations | population |
|---|---|---|---|---|---|
| f7 | 3.1416 | 3.1416 | -1 | 100 | 20 |
| f8 | 0.4542 | -0.2537 | -0.9362 | 100 | 20 |
| f9 | -0.0560e-09 | 0.8207e-09 | 2.3268e-09 | 100 | 20 |
| f10 | 1.6323 | 0.1598 | 1.1078 | 100 | 20 |
| f11 | 2.9981 | -0.6132 | 1.6144 | 100 | 20 |
| f12 | 1.7181e-06 | 0.0012 | -0.0006 | 100 | 20 |
| f13 | -70.3716 | -17.5048 | 0.0022 | 100 | 20 |

Table 3- Inventive S.T. method

|  | $X_1$ | $X_2$ | Minimum | Iterations | population |
|---|---|---|---|---|---|
| f1 | 0.1085e-015 | -0.0947e-015 | 2.0731e-032 | 2 | 20 |
| f2 | -0.0000 | -0.7191 | -0.9988 | 3 | 20 |
| f3 | 364.0945 | -860.7953 | -836.6151 | 5 | 20 |
| f4 | 0.1789e-015 | -0.0615e-015 | 0 | 2 | 20 |
| f5 | -0.1006e-015 | -0.1245e-015 | 4.1136e-032 | 2 | 20 |
| f6 | 0.1859e-015 | 0.1896e-015 | 0 | 2 | 20 |
| f7 | 3.2624 | 3.0980 | -0.9755 | 2 | 20 |
| f8 | 0.1703e-015 | -0.1635e-015 | -1 | 2 | 20 |
| f9 | 0.0800e-015 | -0.1522e-015 | 0 | 2 | 20 |
| f10 | 8.4667e-032 | 0.2909e-015 | -0.2960 | 2 | 20 |
| f11 | 1.7148 | 1.6336 | 1.6563 | 10 | 20 |
| f12 | 0.2773 | 0.3946 | -0.1598 | 5 | 20 |
| f13 | -9.9427 | -2.1731 | 0.0878 | 2 | 20 |

The results show that the inventive method has, quite surprisingly, reached quite the same and sometimes a better solution than PSO and GA in only 2 to at most 5 iterations.

Another favourable and completely unexpected capability of the disclosed method is that the method of the invention has proved capable of solving multi-dimensional optimization problems, for example problem with N=10 variables, in a limited number of iterations, whereas the conventional methods haven't been able to achieve a proper result in 100 iterations, as it will be shown by the following tables.

Table 4- N-variables simulations using GA and PSO.

| Method | Function | Minimum | Iterations | N | population |
|---|---|---|---|---|---|
| GA | Ackley | 0.0369 | 100 | 10 | 20 |
| PSO | Ackley | 1.8242 | 100 | 10 | 20 |

Table 5- N-variables simulations using the inventive S.T. method.

| Test Function | Minimum | Iterations | N | population |
|---|---|---|---|---|
| Spherical | 2.8389e-031 | 2 | 10 | 20 |
| Schwefel | -4.2636e+03 | 10 | 10 | 20 |

(continued)

| Test Function | Minimum | Iterations | N | population |
|---|---|---|---|---|
| Rastrigin | 0 | 2 | 10 | 20 |
| Hyperellipsoid | 1.3314e-030 | 2 | 10 | 20 |
| Griewank | 0 | 2 | 10 | 20 |
| Easom | -2.5133e-017 | 2 | 10 | 20 |
| Ackley | 0 | 2 | 10 | 20 |
| Quadric | 3.5436e-031 | 2 | 10 | 20 |
| Rosenbrock | 68.8425 | 20 | 10 | 20 |
| Zakharov | 0.7934 | 10 | 10 | 20 |
| Levy | 0.0462 | 2 | 10 | 20 |
| Schwefel | -8.5616e+03 | 15 | 20 | 20 |
| Rastrigin | 0 | 2 | 20 | 20 |
| Hyperellipsoid | 7.4256e-030 | 2 | 20 | 20 |
| Griewank | 0 | 2 | 20 | 20 |
| Easom | -3.5111 e-064 | 2 | 20 | 20 |
| Ackley | 0 | 2 | 20 | 20 |
| Quadric | 3.8821e-030 | 2 | 20 | 20 |
| Rosenbrock | 36.5300 | 30 | 20 | 20 |
| Zakharov | 4.1338 | 20 | 20 | 20 |
| Levy | 0.0114 | 20 | 20 | 20 |
| Spherical | 1.6671e-030 | 2 | 50 | 20 |
| Schwefel | -2.050e+004 | 35 | 50 | 20 |
| Rastrigin | 0 | 2 | 50 | 20 |
| Hyperellipsoid | 5.0879e-029 | 2 | 50 | 20 |
| Griewank | 0 | 2 | 50 | 20 |
| Easom | -6.8077e-202 | 2 | 50 | 20 |
| Ackley | 0 | 2 | 50 | 20 |
| Quadric | 1.0921e-029 | 2 | 50 | 20 |
| Rosenbrock | 29.3471 | 50 | 50 | 20 |
| Zakharov | 12.4339 | 20 | 50 | 20 |
| Levy | 0.0187 | 20 | 50 | 20 |
| Spherical | 3.5775e-030 | 5 | 100 | 20 |
| Schwefel | -4.291e+004 | 50 | 100 | 20 |
| Rastrigin | 0 | 6 | 100 | 20 |
| Hyperellipsoid | 1.5986e-028 | 2 | 100 | 20 |
| Griewank | 0 | 4 | 100 | 20 |
| Easom | 0 | 2 | 100 | 20 |
| Ackley | 0 | 2 | 100 | 20 |
| Quadric | 1.0385e-029 | 2 | 100 | 20 |

(continued)

| Test Function | Minimum | Iterations | N | population |
|---|---|---|---|---|
| Rosenbrock | 49.3193 | 150 | 100 | 20 |
| Zakharov | 30.3221 | 20 | 100 | 20 |
| Levy | 0.0229 | 30 | 100 | 20 |

The method of the invention can be usefully applied to constrained problem as well, by inserting the appropriate steps of enforcing the constraints in the update to the particle's positions. A comparison between the inventive method, PSO and GA will be given using the following constrained optimization problem:

$$F = 5.3578547x_3^2 + 0.8356891x_1x_5 + 37.293239x_1 - 40792.141$$

$$0 \leq 85.334407 + 0.0056858x_2x_5 + 0.00026x_1x_4 - 0.0022053x_3x_5 \leq 92$$

$$90 \leq 80.51249 + 0.0071317x_2x_5 + 0.0029955x_1x_2 + 0.0021813x_3^2 \leq 110$$

$$20 \leq 9.300961 + 0.0047026x_3x_5 + 0.0012547x_1x_3 + 0.0019085x_3x_4 \leq 25$$

Table 6- constrained problem

| Method | F(x) | First Constraint | Second Constraint | Third Constraint | Number of population/ Iteration |
|---|---|---|---|---|---|
| PSO | -3.104e+004 | 92.0000 | 100.9538 | 20.0000 | 20 / 100 |
| GA | -3.063e+004 | 91.1094 | 100.1313 | 20.0000 | 20 / 100 |
| S.T. | -3.036e+004 | 91.6166 | 100.9799 | 20.3001 | 20 / 2 |

## Claims

1. A parameter optimization technique for finding an optimal value of a fitness function, the fitness function being a function of a plurality of parameters in a multidimensional search space, the method involving the steps of:

   defining a population consisting of plurality of particles, each particle represented by a point having a position in the search space, and a velocity;

   iteratively performing the steps of:

   calculating the value of the fitness function for each particle in the population;
   deciding which particle has the best fitness value;
   updating the position and the velocity of each particle in the population.

   **characterized in that**
   the step of updating the velocity of each particle includes the dynamic effect of a random-generated force.

2. The method of the previous claim, wherein the step of updating the velocity of each particle includes:

defining a population consisting of plurality of particles, each particle represented by a point having a position in the search space, and a velocity;

3. The method of any of the previous claims, in which the particles of the population have a mass, or an inertial parameter.

4. The method of the previous claim, in which the masses in the population are randomly generated initially, and remain unchanged during the iteration steps.

5. The method of any of the previous claims, further comprising a step of cutting particle velocities exceeding predetermined bounds

6. The method of any of the previous claims, wherein the search space is bound.

7. The method of any of the previous claims, further comprising a step of terminating the iterations when ...

8. A computer program including software code executable by the processor of an electronic computer, arranged to execute the method of any of the preceding claims.

9. An optimization device, comprising an electronic processor programmed to find optimal parameter values according to the method of any of claims 1-7.

**Fig. 1**

15 — initial population

21 — i=1, j=1

22 — eval F

23 — F<best —T→ 24 — update best

30 — update v,x

29 — stop —T→

25 — next j

27 — next i

30

31 — fx, fy

33 — $v_{ix}$, $v_{iy}$

34 — $X_{ix}$, $X_{iy}$

35 — Xi

**Fig. 2**

Fig. 3

Europäisches
Patentamt

European
Patent Office

Office européen
des brevets

## EUROPEAN SEARCH REPORT

Application Number

EP 10 15 1229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | R. POLI, J. KENNEDY, T. BLACKWELL: "Particle swarm optimization: An overview", SWARM INTELLIGENCE, vol. 1, no. 1, 1 August 2007 (2007-08-01), pages 33-57, XP002619125, DOI: 10.1007/s11721-007-0002-0 * the whole document * ----- | | INV. G06N3/00 |
| T | Y. DEL VALLE, G. K. VENAYAGAMOORTHY, S. MOHAGHEGHI, J.-C. HERNANDEZ, R. G. HARLEY: "Particle swarm optimization: Basic concepts, variants and applications in power systems", IEEE TRANSACTIONS ON EVOLUTIONARY COMPUTATION, vol. 12, no. 2, April 2008 (2008-04), pages 171-195, XP011201981, * the whole document * ----- | | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 28 January 2011 | Douarche, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)